Europäisches Patentamt

European Patent Office

Office européen des brevets

(19)

(11) Veröffentlichungsnummer: **0 651 524 A2**

## (12) EUROPÄISCHE PATENTANMELDUNG

(21) Anmeldenummer: **94117005.2**

(22) Anmeldetag: **27.10.94**

(51) Int. Cl.⁶: **H04B 7/26**

(30) Priorität: **30.10.93 DE 4337244**

(43) Veröffentlichungstag der Anmeldung:
**03.05.95 Patentblatt 95/18**

(84) Benannte Vertragsstaaten:
**DE FR GB IT SE**

(71) Anmelder: **Alcatel Mobile Communication Deutschland GmbH**
**Holderäckerstrasse 10**
**70499 Stuttgart (DE)**

(72) Erfinder: **Böhm, Manfred, Dr.**
**Solitudestrasse 389**
**D-70499 Stuttgart (DE)**

(74) Vertreter: **Pohl, Herbert, Dipl.-Ing et al**
**Alcatel SEL AG**
**Patent- und Lizenzwesen**
**Postfach 30 09 29**
**D-70449 Stuttgart (DE)**

(54) **Mobilfunksystem mit einem Zwischenverstärker.**

(57) In Mobilfunksystemen werden Zwischenverstärker dazu verwendet, um die Nachrichtenübertragung über große Entfernungen mit ortsbeweglichen Funkgeräten zu gewährleisten, die eine geringe Sendeleistung haben.

Eine geringe Sendeleistung wird angestrebt, um u.a. eventuelle gesundheitliche Beeinträchtigungen der Teilnehmer zu reduzieren.

Der in dem Mobilfunksystem verwendete Zwischenverstärker (R) hat eine Sendeantenne (1), die ein bezüglich einer horizontalen leitenden Fläche (4) angehobenes Antennendiagramm (S1) hat, und eine Empfangsantenne (2), die ein bezüglich der Fläche (4) abgesenktes Antennendiagramm (E2) hat. Das Senden und Empfangen erfolgt bei der gleichen Frequenz und ohne daß ein Zeitschlitz geändert wird.

Fig. 2

Rank Xerox (UK) Business Services
(3.10/3.09/3.3.4)

Die Erfindung betrifft ein Mobilfunksystem mit mindestens einer Mobilstation, mindestens einer Basisstation und mindestens einem Zwischenverstärker.

Solche Mobilfunksysteme sind z. B. aus EP-B1 0 261 127 bekannt. Dort ist ein Mobilfunksystem gezeigt, das aus zwei Mobilstationen (einer tragbaren (engl.: portable) und einer, die an ein Fahrzeug gebunden ist), einer Basisstation und einem Zwischenverstärker (engl.: repeater) besteht.

Dort soll eine wirkungsvolle Ausnutzung des Spektrums von Funkfrequenz-Übertragungskanälen in einem im Zeitteilungs-Multiplexbetrieb (TDMA) arbeitenden Funksystem erreicht werden, das Übertragungskanäle auf mindestens zwei Zeitschlitze verteilt.

Die Signalübertragung von der Basisstation zu den Mobilstationen (engl.: down-link) und umgekehrt (engl.: up-link) erfolgt immer über den Zwischenverstärker.

Zwischenverstärker dienen in Mobilfunksystemen allgemein dazu, ankommende Signale zu verstärken und die verstärkten Signale weiterzusenden.

Der Zwischenverstärker, der in dem genannten Mobilfunksystem verwendet wird, ist für bidirektionale Übertragung, d. h. für down-link und up-link, ausgelegt. Er empfängt Signale mit einer ersten Frequenz und sendet diese entweder mit der ersten Frequenz oder mit einer zweiten Frequenz. Dieser Zwischenverstärker hat u.a. eine Steuereinrichtung, einen Taktregenerator, einen Duplexer und einen Speicher, um das Senden und Empfangen in unterschiedlichen Zeitschlitzen zu gewährleisten.

Durch das Senden und Empfangen in unterschiedlichen Zeitschlitzen werden Rückkopplungen des Senders auf den Empfänger vermieden, die vor allem dann auftreten, wenn das Sendesignal die gleiche Frequenz hat wie das Empfangssignal.

Dieses Mobilfunksystem ist aufwendig. Der darin verwendete Zwischenverstärker ist durch seine Möglichkeit zur bidirektionalen Übertragung und dadurch, daß das Senden und Empfangen in unterschiedlichen Zeitschlitzen erfolgt, sehr aufwendig.

Eine Aufgabe der Erfindung ist, ein einfacheres Mobilfunksystem anzugeben, bei den Mobilstationen, insbesonders tragbare Mobiltelefone, mit geringer Sendeleistung verwendet werden können, so daß unter anderem eventuelle gesundheitliche Beeinträchtigungen des Teilnehmers reduziert werden und sich die Gesprächsdauer bei unveränderter Batterieleistung erhöht. Diese Aufgabe ist wie in Anspruch 1 angegeben gelöst.

Außerdem ist es eine Aufgabe der Erfindung, einen einfachen Zwischenverstärker für ein solches Mobilfunksystem anzugeben. Diese Aufgabe ist wie in Anspruch 2 angegeben gelöst. Vorteilhafte Ausgestaltungen der Erfindung sind in den Unteransprüchen angegeben.

Vorteilhaft an der Erfindung ist, daß Rückkopplungen des Senders auf den Empfänger durch eine einfache Antenneneinheit vermieden werden und nicht durch eine Frequenzumsetzung des zu sendenden Signals oder dadurch, daß das Senden und Empfangen in unterschiedlichen Zeitschlitzen erfolgt.

Die Erfindung wird nun anhand der Zeichnungen näher erläutert. Es zeigen:

Fig. 1    ein einfaches Mobilfunksystem mit einer Basisstation, einem Zwischenverstärker und einer Mobilstation,

Fig. 2    ein Ausführungsbeispiel eines Zwischenverstärkers,

Fig. 3    ein schematisches vertikales Antennendiagramm des Zwischenverstärkers

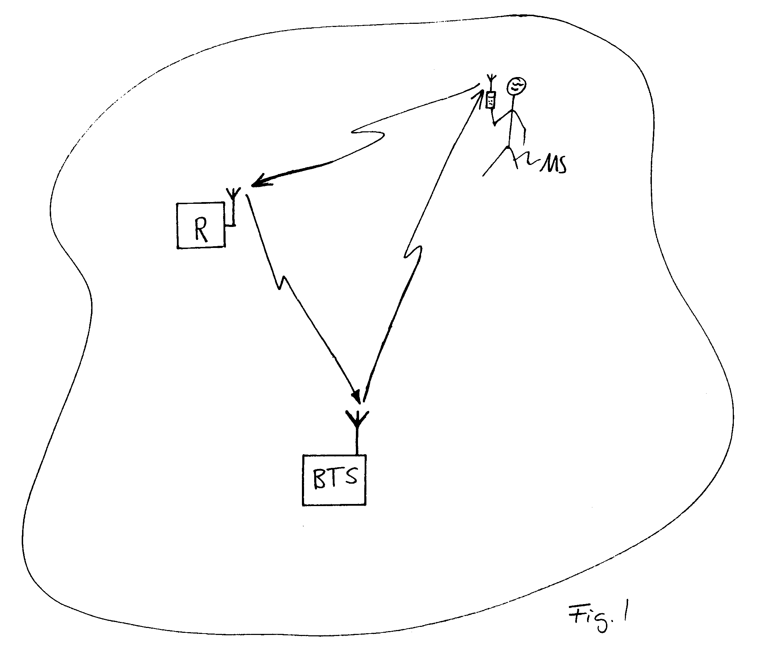

In Fig. 1 ist eine Zelle eines zellularen Mobilfunksystems gezeigt, in der sich eine ortsfeste Basisstation BTS, ein erfindungsgemäßer Zwischenverstärker R und eine Mobilstation MS befinden. Ein Funksignal, das von der Mobilstation MS ausgesendet wird, wird mit Hilfe des Zwischenverstärkers R zur Basisstation BTS übertragen. Ein Funksignal, das von der Basisstation BTS ausgeht, wird dagegen direkt zur Mobilstation MS übertragen. Die Übertragungsrichtungen sind durch Pfeile angedeutet.

Bei dem erfindungsgemäßen Mobilfunksystem handelt es sich somit um ein System, in dem der Zwischenverstärker R nur an der Übertragung von Signalen in einer einzigen Richtung, nämlich von der Mobilstation MS zur Basisstation BTS (up-link), beteiligt ist.

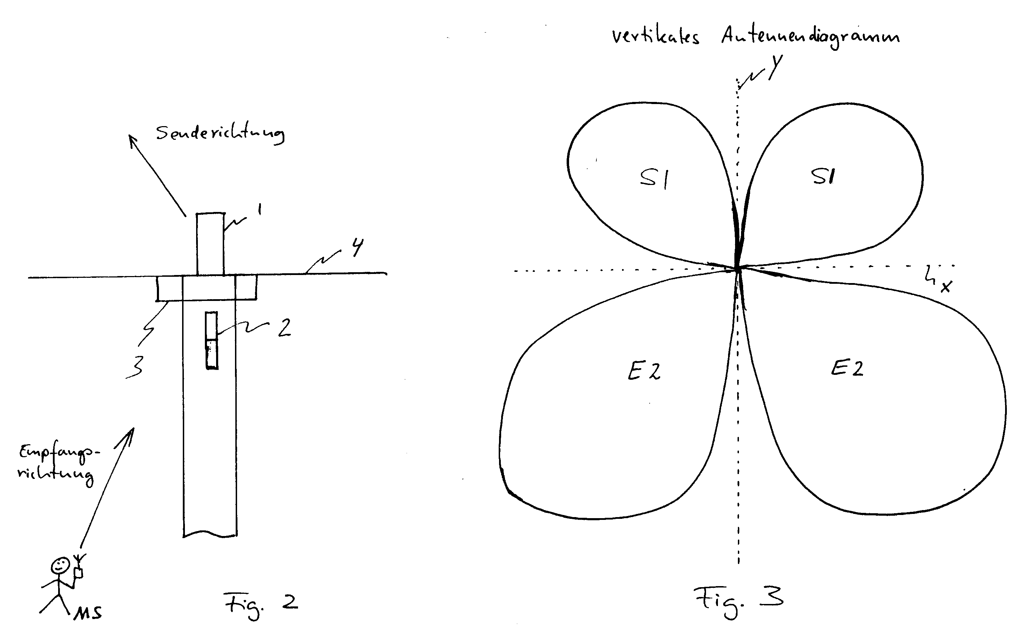

In Fig. 2 ist ein Ausführungsbeispiel eines Zwischenverstärkers R gezeigt. Er hat als Sendeantenne 1 einen vertikalen Monopol, der senkrecht auf einer horizontalen elektrisch leitenden Fläche 4 angeordnet ist. Unterhalb der Fläche 4 hat er in Längsrichtung des Monopols 1 als Empfangsantenne 2 eine Rohrschlitzantenne. Die Sendeantenne 1, die Empfangsantenne 2 und die Flache 4 bilden eine Antenneneinheit. Außerdem hat er einen Breitbandverstärker 3, der sich hier unterhalb der Fläche 4 befindet, und nicht gezeigte Mittel zur Energieversorgung. Beispielhafte Empfangs- und Senderichtungen sind eingezeichnet.

Die Antennen 1 und 2 des Zwischenverstärkers R haben in Fig. 3 gezeigte vertikale Antennendiagramme. Das Antennendiagramm des Monopols 1 ist mit S1 bezeichnet und das der Rohrschlitzantenne 2 mit E2. Beide Antennendiagramme sind kreissymmetrisch bezüglich einer vertikalen Achse Y. Man erkennt, daß das Antennendiagramm S1 des Monopols 1 bezüglich einer horizontalen Achse X angehoben ist und das Diagramm E2 der Rohrschlitzantenne 2 bezüglich der horizontalen Achse X abgesenkt ist. Das bedeutet, daß in einem durch das Diagramm E2 festgelegten Winkelbereich Funksignale einer Mobilstation MS empfangen und in einem durch das Diagramm S1 festgelegten Winkelbereich zur Basisstation BTS ausgesendet werden.

Anstelle des Monopols 1 mit dem kreissymmetrischen Diagramm S1 kann auch eine Monopol-Yagi-Antennenkombination verwendet werden, um die auszusendenden Funksignale auf die Basisstation auszurichten. Diese Antennenkombination besteht aus einem Monopol und einer Yagi-Antenne. Dadurch kann die Sendeleistung der Sendeantenne 1 reduziert werden.

Die Anhebung und Absenkung der Antennendiagramme erfolgt durch die elektrisch leitende Fläche 4, die z.B. einen Durchmesser D hat, der mindestens fünfmal größer als die Wellenlänge $\lambda$ des Funksignals ist, d.h.: $D \geq 5 \cdot \lambda$. Hauptsächlich dient die leitende Fläche 4 jedoch zur elektromagnetischen Entkopplung der Sende- und Empfangsantenne. Das bedeutet, daß die Antenneneinheit so ausgelegt ist, daß sich die beiden Antennen 1,2 gegenseitig elektromagnetisch nicht beeinflussen. Die elektromagnetische Entkopplung erfolgt hier durch besondere Auslegung der Antenneneinheit und z. B. nicht durch eine Frequenzumsetzung des zu sendenden Signals. Da der Zwischenverstärker R bei gleicher Frequenz sendet und empfängt, ist auf eine ausreichende Entkopplung zu achten, um zu verhindern, daß Funksignale, die der Zwischenverstärker R aussendet, von der Empfangsantenne desselben Zwischenverstärkers R empfangen werden.

Das ebenfalls kreissymmetrische Antennendiagramm E2 wird durch die geometrischen Parameter der Rohrschlitzantenne 2 festgelegt. Parameter sind z.B. der Rohrdurchmesser D und die Anzahl der Schlitze. Laut Heilmann, A., "Antennen", Bibliographisches Institut, Mannheim, Wien, Zürich, 1970, Seiten 119 bis 148, ist bei einem Durchmesser D von $D < \lambda/8$ das horizontale Antennendiagramm nahezu kreisförmig. Die Empfangsantenne 2 kann auch eine Mehrschlitzantenne sein. Damit es zu keiner Abschattung durch ein dickes Antennenrohr kommt, können z. B. 3-4 Schlitze am Rohrumfang angeordnet sein.

Als Empfangsantenne kann auch eine Dipolgruppe mit Reflektor verwendet werden.

Der verwendete Breitbandverstärker 3 ist z.B. ein Transparenz-Verstärker, dessen Verstärkung in dem betrachteten Frequenzbereich unabhängig von der Frequenz f ist; die Frequenz $f_{in}$ des zu verstärkenden Signals ist gleich der Frequenz $f_{out}$ des verstärkten Signals: $f_{in} = f_{out}$.

Dieser Verstärker hat nur die Aufgabe, die zu übertragenden Signale zu verstärken, ohne dabei charakteristische Parameter der Signale zu verändern. Solche charakteristischen Parameter sind u.a. die Frequenz, die Modulationsart und die belegten Zeitschlitze. Es erfolgt keine Demodulation der empfangenen Signale, keine Transformation ins Basisband, keine Änderung der belegten Zeitschlitze und keine Frequenzumsetzung. Senden und Empfangen erfolgt somit im gleichen Zeitschlitz.

Der Zwischenverstärker R ist in der Funkzelle so anzuordnen, daß seine Empfangsantenne die Funksignale des Teilnehmers, der sich üblicherweise in Bodennähe befindet, empfangen kann; er ist z.B. auf Dächern oder Masten erhöht anzubringen.

## Patentansprüche

1. Mobilfunksystem mit mindestens einer ortsfesten Basisstation (BTS) und mindestens einer Mobilstation (MS), **dadurch gekennzeichnet**, daß es mindestens einen Zwischenverstärker (R) hat, der nur an der Übertragung von Signalen in einer einzigen Richtung, nämlich von der Mobilstation (MS) zur Basisstation (BTS), beteiligt ist.

2. Zwischenverstärker (R) für ein Mobilfunksystem nach Anspruch 1, dadurch gekennzeichnet, daß er einen Verstärker (3) hat, der die zu übertragenden Signale verstärkt, ohne charakteristische Parameter der Signale zu verändern.

3. Zwischenverstärker (R) nach Anspruch 2, dadurch gekennzeichnet, daß er eine Antenneneinheit hat, die aus einer Sendeantenne (1) und einer Empfangsantenne (2) besteht, wobei die Antenneneinheit so ausgelegt ist, daß sich die Sendeantenne (1) und die Empfangsantenne (2) gegenseitig elektromagnetisch nicht beeinflussen.

4. Zwischenverstärker (R) nach Anspruch 3, dadurch gekennzeichnet, daß die Sendeantenne (1) oberhalb einer horizontalen elektrisch leitenden Fläche (4) und die Empfangsantenne (2) unterhalb dieser angeordnet ist, wobei eine gegenseitige Beeinflussung der beiden Antennen (1, 2) durch die Fläche (4) vermieden wird.

5. Zwischenverstärker (R) nach Anspruch 4, dadurch gekennzeichnet, daß die Sendeantenne (1) bezüglich der Fläche (4) ein angehobenes Antennendiagramm hat und die Empfangsantenne (2) ein abgesenktes Antennendiagramm.

6. Zwischenverstärker (R) nach Anspruch 5, dadurch gekennzeichnet, daß die Sendeantenne (1) ein Monopol ist und die Empfangsantenne (2) eine Dipol-Rohrschlitzantenne.

7. Zwischenverstärker (R) nach Anspruch 5, dadurch gekennzeichnet, daß die Sendeantenne (1) eine Monopol-Yagi-Antennenkombination ist und die Empfangsantenne (2) eine Dipol-Rohrschlitzantenne.

8. Zwischenverstärker (R) nach Anspruch 4, dadurch gekennzeichnet, daß die Fläche (4) einen Durchmesser D hat, der mindestens das fünffache der Signalwellenlänge $\lambda$ beträgt.

Fig. 1

EP 0 651 524 A2

Senderichtung

Empfangsrichtung

MS

Fig. 2

vertikales Antennendiagramm

S1    S1

E2    E2

Fig. 3

EP 0 651 524 A2